(19) Europäisches Patentamt
European Patent Office
Office européen des brevets

(11) **EP 4 299 510 A1**

(12) **EUROPEAN PATENT APPLICATION**
published in accordance with Art. 153(4) EPC

(43) Date of publication:
**03.01.2024 Bulletin 2024/01**

(21) Application number: **22780317.8**

(22) Date of filing: **22.03.2022**

(51) International Patent Classification (IPC):
***C01B 13/16*** (2006.01)     ***C01B 33/18*** (2006.01)

(52) Cooperative Patent Classification (CPC):
**C01B 13/16; C01B 33/18**

(86) International application number:
**PCT/JP2022/013187**

(87) International publication number:
**WO 2022/210102 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021   JP 2021060864**

(71) Applicant: **Denka Company Limited
Tokyo 103-8338 (JP)**

(72) Inventors:
• **MINAMIKAWA, Takaaki**
 **Tokyo 103-8338 (JP)**
• **SHIOTSUKI, Hiroyuki**
 **Tokyo 103-8338 (JP)**
• **MIYAZAKI, Koji**
 **Tokyo 103-8338 (JP)**

(74) Representative: **Gulde & Partner
Patent- und Rechtsanwaltskanzlei mbB
Wallstraße 58/59
10179 Berlin (DE)**

(54) **METAL OXIDE POWDER, AND METHOD FOR PRODUCING SAME**

(57)     The method of producing a metal oxide powder according to the present invention includes a heating step in the presence of a halogen, which heats a metal oxide in the presence of a halogen. The metal oxide powder of the present invention is a metal oxide powder in which the metal is other than uranium, iron and titanium, and, in the metal oxide powder, the content rate of uranium is 1.0 ppb by mass or less, the content rate of iron is 100 ppm by mass or less in terms of $Fe_2O_3$, the content rate of titanium in terms of $TiO_2$ oxide is 8 ppm by mass or less. The present invention can provide a method of producing a metal oxide powder which removes impurities from a metal oxide powder so that a metal oxide powder having a high purity can be obtained, and a metal oxide powder produced according to the method.

Fig. 1

EP 4 299 510 A1

**Description**

Technical Field

The present invention relates to a method of producing a metal oxide powder having a high purity and a metal oxide powder obtained according to the production method.

Background Art

So far, impurities are removed from a metal oxide powder according to various methods. For example, a metal oxide powder is passed through a foreign substance-removing device including a magnet having a magnetic flux density of 4,000 gauss or more, thereby removing magnetizable foreign substances, which are impurities, from the metal oxide powder (for example, refer to PTL 1).

Citation List

Patent Literature

PTL 1: JP 2010-159168 A

Summary of Invention

Technical Problem

However, the level of the purity of the metal oxide powder being demanded by the user is increasing more and more, and therefore, there is a problem that the removal of the impurities with a magnet as described in PTL 1 does not meet with the requirement on the purity of the metal oxide powder demanded by the user. As the impurities which are difficult to be removed, uranium, iron, and titanium are exemplified.

Accordingly, an object of the present invention is to provide a technique necessary for removing all of uranium, iron, and titanium which are impurities from a metal oxide powder to thereby obtain a metal oxide powder having a high purity.

Solution to Problem

As a result of proceeding with assiduous research, the present inventors have found that the above problems can be solved by heating a metal oxide in the presence of a halogen.

The present invention is based on the above founding, and summarized as follows.

[1] A method of producing a metal oxide powder, including a heating step in the presence of a halogen, which heats a metal oxide in the presence of a halogen.

[2] The method of producing a metal oxide powder according to [1], wherein the halogen is chlorine.

[3] The method of producing a metal oxide powder according to [1] or [2], further including, after the heating step in the presence of a halogen, a first heating step at reduced pressure, which heats the metal oxide at reduced pressure.

[4] The method of producing a metal oxide powder according to [3], wherein a cycle composed of the heating step in the presence of a halogen and the first heating step at reduced pressure is repeated two times or more.

[5] The method of producing a metal oxide powder according to any one of [1] to [4], further including a heating step in the presence of an inert gas, which heats the metal oxide in the presence of an inert gas.

[6] The method of producing a metal oxide powder according to [5], wherein the heating temperature of the heating step in the presence of an inert gas is higher than the heating temperature of the heating step in the presence of a halogen.

[7] The method of producing a metal oxide powder according to [5] or [6], further including, after the heating step in the presence of an inert gas, a second heating step at reduced pressure which heats the metal oxide at reduced pressure.

[8] The method of producing a metal oxide powder according to [7], wherein a cycle composed of the heating step in the presence of an inert gas and the second heating step at reduced pressure is repeated two times or more.

[9] The method of producing a metal oxide powder according to any one of [1] to [8], wherein the heating temperature of the heating step in the presence of a halogen is such a temperature that impurities to be aimed react with a halogen to become halides.

[10] The method of producing a metal oxide powder according to any one of [1] to [9], wherein the metal oxide is at least one selected from the group consisting of silicon dioxide and aluminum oxide.

[11] A metal oxide powder, wherein the metal is a metal other than uranium, iron and titanium, and, in the metal oxide powder, the content rate of uranium is 1.0 ppb by mass or less, the content rate of iron is 100 ppm by mass or less in terms of $Fe_2O_3$, and the content rate of titanium in terms of $TiO_2$ is 10 ppm by mass or less.

Advantageous Effects of Invention

The present invention can provide a method of producing a metal oxide powder which removes impurities from a metal oxide powder so that a metal oxide powder having a high purity can be obtained, and a metal oxide powder produced according to the method.

Brief Description of Drawing

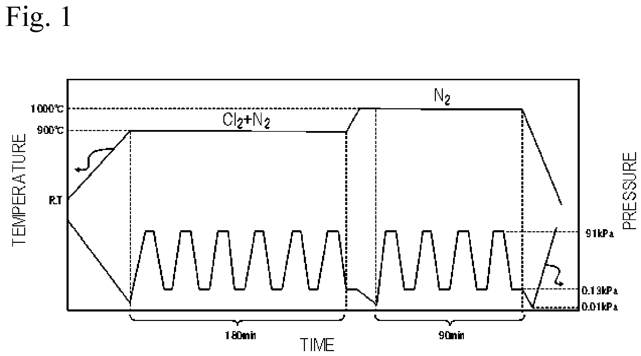

Fig. 1 is a figure indicating the outline of the conditions on the temperature and pressure of the chlorine treatment in Examples.

Description of Embodiments

Referring to a method of producing a silicon dioxide powder, which is one embodiment according to the present invention, as an example, a method of producing a metal oxide powder according to the present invention is described below. Incidentally, the method of producing a metal oxide powder according to the present invention is not limited to the method of producing a silicon dioxide powder which is one embodiment according to the present invention.

The method of producing a silicon dioxide powder, which is one embodiment according to the present invention, includes a step (A) of providing a silicon dioxide powder raw material, a step (B) of melting and spheroidizing the silicon dioxide powder raw material to prepare an unclassified molten spherical silicon dioxide powder, a step (C) of classifying the unclassified molten spherical silicon dioxide powder to prepare molten spherical silicon dioxide powders classified into the respective ranges of the particle size, a step (D) of blending the molten spherical silicon dioxide powders classified into the different ranges of the particle size to prepare a blended product of the molten spherical silicon dioxide powders, and a step (E) of subjecting the blended product of the molten spherical silicon dioxide powders to a chlorine treatment, and a step (F) of commercializing the resulting blended product.

(Step (A))

In the step (A), a silicon dioxide powder raw material is provided. Examples of the silicon dioxide powder raw material include a silica powder obtained by pulverizing natural silica, silica gel synthetized by a wet reaction between an alkali silicate and a mineral acid, a product obtained by pulverizing gel prepared from an alkoxy silane by a sol-gel method, and a metallic silicon particle. Among these silicon dioxide powder raw materials, silica powder obtained by pulverizing natural silica is preferred in terms of the production cost and easiness in adjusting the particle size of the raw material powder. For preparing a silicon dioxide powder having a high purity with a silica powder, as the silica powder a natural high purity silica having a purity of $SiO_2$ of 99.5% by mass or more is generally used. However, the natural high purity silica is rare, so there is a possibility that the cost for the raw material increases or the supply of the raw material becomes unstable. In the method of producing a silicon dioxide powder which is one embodiment according to the present invention, as the chlorine treatment described later is performed, even if a natural silica having a low purity of $SiO_2$ is used, a silicon dioxide powder having a high purity can be produced, and therefore, the cost for the raw material can be reduced.

The silica powder, which is used as a silicon dioxide powder raw material, can be produced as follows, for example. The silica is washed with water, and then pulverized with a pulverizer such as a vibrating mill or a ball mill, thus preparing a silica powder. The particle size distribution of the prepared silica powder may be adjusted by using a vibrating screen or a classifier.

The particle size of the silicon dioxide powder raw material can be varied freely according to the particle size of the product to be desired. Generally, those having an average particle size of, for example, 100 $\mu$m or less can be used, and those including fine particles of 1 $\mu$m or less which are likely to agglomerate in a large amount may be used.

(Step (B))

In the step (B), an unclassified molten spherical silicon dioxide powder is prepared by melting and spheroidizing the silicon dioxide powder raw material. For example, the silicon dioxide powder raw material is injected in a flame, whereby the silicon dioxide powder raw material melts and simultaneously spheroidizes due to surface tension. The droplets of the silicon dioxide powder raw material passed through the flame are cooled rapidly to become an unclassified molten spherical silicon dioxide powder which is an amorphous spherical silicon dioxide. As a fuel gas for forming a flame, for example, propane, butane, propylene, acetylene, hydrogen or the like can be used, and as a supporting gas, air, oxygen, or the like may be used. The temperature of the flame is, for example, from 2000 to 2400°C.

The spheroidicity of the unclassified molten spherical silicon dioxide powder can be adjusted according to the heat quantity of the flame and the injection quantity of the silicon dioxide powder raw material. In the case where the heat quantity of the flame is insufficient, molten spheroidization becomes insufficient, so that the spheroidicity of the unclassified molten spherical silicon dioxide powder becomes low. In the case where the heat quantity of the flame is too large, the production cost for the unclassified molten spherical silicon dioxide powder becomes high. In the case where the injection amount of the silicon dioxide powder raw material is too large, molten particles agglomerate so that the spheroidicity of the unclassified molten spherical silicon dioxide powder becomes low. In the case where the injection amount of the silicon dioxide powder raw material is too small, the production cost for the unclassified molten spherical silicon dioxide powder becomes high.

(Step(C))

In the step (C), the unclassified molten spherical silicon dioxide powder is classified, thereby preparing molten spherical silicon dioxide powders classified into the respective ranges of the particle size. For example, in the case of collecting the unclassified molten spherical silicon dioxide powder obtained by passing the silicon dioxide powder raw material through the flame, the unclassified molten spherical silicon dioxide powder is classified into some ranges of the particle size, and then collected. The coarse particles may be collected by using a gravity settling room, a cyclone, or the like, and the fine particles may be collected by using a bag filter, an electric dust collector or the like. Subsequently, the classified molten spherical silicon dioxide powder may be further classified into the respective ranges of the particle size by using a classifier such as a pneumatic classifier, a vibrating screen, a cylindrical screen, or the like.

(Step (D))

In the step (D), the molten spherical silicon dioxide powders classified into the different ranges of the particle size are blended to prepare a blended product of the molten spherical silicon dioxide powders. For example, the molten spherical silicon dioxide powders classified into the different ranges of the particle size are formulated in such a proportion that they form closest-packing in combination. The formulated molten spherical silicon dioxide powders are mixed by using a mixer such as a V-type blender, a double cone blender, or an air blender. Thus, a blended product of the molten spherical silicon dioxide powders, which has a good filling property, can be produced.

(Step (E))

In the step (E), the blended product of the molten spherical silicon dioxide powders is subjected to a chlorine treatment. In the following, the chlorine treatment to the blended product of the molten spherical silicon dioxide powders is described in detail.

The chlorination treatment in the step (E) includes a step of heating in the presence of chlorine, which heats the blended product in the presence of chlorine. By this treatment, the impurities in the blended product are chlorinated to become the chlorides, and the chlorides sublime. As the result, the impurities are separated from the blended product so that the purity of the blended product increases.

The heating temperature in the step of heating in the presence of chlorine is not limited particularly, as long as it is such a temperature that the impurities are chlorinated in the presence of chlorine to become the chlorides and silicon dioxide is not chlorinated as much as possible. By adjusting the heating temperature in the step of heating in the presence of chlorine to such a temperature that the impurities to be aimed is chlorinated to become the chlorides, it is possible to remove the impurities to be aimed among the impurities in the blended product from the blended product. From the viewpoint of effectively converting the impurities in the blended product to the chlorides in the presence of chlorine and sublimating the chlorides, and the viewpoint of restraining silicon dioxide from being chlorinated, the heating temperature in the step of heating in the presence of chlorine is preferably from 400 to 1200°C, more preferably from 430 to 1100°C, further preferably from 450 to 1050°C. Furthermore, from the viewpoint of converting the impurities in the blended product to the chlorides as much as possible and the viewpoint of the efficiency of the chlorination treatment, the heating time in the step of heating in the presence of chlorine is preferably from 1 to 120 minutes, more preferably from 1 to 60 minutes, further preferably from 3 to 45 minutes. Incidentally, in the case of repeating the cycle described later, the heating time is the heating time in the step of heating in the presence of chlorine of each cycle. From the viewpoint of sublimating the chlorides generated from the chlorination of the impurities and the viewpoint of the amount of chlorine in the atmosphere, the pressure of the circumference of the blended product in the step of heating in the presence of chlorine is preferably from 0.0001 to 100 kPa, more preferably from 0.0005 to 50 kPa, further preferably from 0.01 to 20 kPa. Since chlorine has corrosiveness, it is preferred to supply chlorine as a mixture with an inert gas such as nitrogen or argon. From the viewpoint of converting the impurities in the blended product to the chlorides and the viewpoint of the corrosiveness of chlorine, the content rate of chlorine in the circumference of the blended product is preferably 30% by volume or more, more preferably 50% by volume or more, further preferably 80% by volume or more.

From the viewpoint of removing even impurities present in the center of silicon dioxide particle while maintaining the form of the silicon dioxide powder by heating in the presence of chlorine, the average particle size of the silicon dioxide powder, in which impurities are to be removed by heating in the presence of chlorine, is preferably from 0.002 to 100 μm, more preferably from 0.005 to 50 μm, further preferably from 0.01 to 11 μm, most preferably from 0.01 to 10 μm. Incidentally, the average particle size of the silicon dioxide powder is a median size of the particle size distribution measured according to a laser diffraction scattering method.

The chlorine treatment may further include a first heating step at reduced pressure, which heats the blended product at reduced pressure, after the step of heating in the presence of chlorine. This enables the chlorides generated by chlorinating the impurities to sublimate more completely. As the result, the purity of the blended product can be further increased. Furthermore, the remaining chlorine in the blended product can be removed from the blended product. In the case where the blended product having a high content rate of chlorine is used for a semiconductor sealing material, there are some cases where HCl is generated to corrode lead wires. From the viewpoint of sublimating the chlorides generated by chlorination of the impurities more completely and the viewpoint of cost for heating, the heating temperature of the first heating step at reduced pressure is preferably from 600 to 1250°C, more preferably from 700 to 1200°C, further preferably from 800 to 1150°C. From the viewpoint of sublimating the chlorides generated by chlorination of the impurities more completely and the viewpoint of the cost for reducing pressure, the pressure of the circumference of the blended product in the first heating step at reduced pressure is, in terms of absolute pressure, preferably from 0.0001 to 100 kPa, more preferably from 0.0005 to 50 kPa, further preferably from 0.01 to 20 kPa. From the viewpoint of sublimating the chlorides generated by chlorination of the impurities more completely and the viewpoint of the productivity, the time of maintaining the predetermined, reduced pressure in the first heating step at reduced pressure is preferably from 5 to 180 minutes, more preferably from 10 minutes to 120 minutes, further preferably from 15 minutes to 60 minutes. Incidentally, in the case where the cycle described later is repeated, the time of maintaining the predetermined, reduced pressure is the time of maintaining the predetermined, reduced pressure in the first heating step at reduced pressure of each cycle.

It is preferred that a cycle composed of the heating step in the presence of chlorine and the first heating step at reduced pressure is repeated two times or more. In this case, a larger amount of the impurities is separated from the blended product, so that the purity of the blended product is further increased. From the viewpoint of highly purifying the blended product and the viewpoint of the productivity, the cycle composed of the heating step in the presence of a halogen and the first heating step at reduced pressure is repeated, preferably from 2 to 20 times, more preferably from 3 to 15 times, further preferably from 4 to 9 times.

It is preferred that the chlorine treatment further includes a heating step in the presence of an inert gas, which heats the blended product in the presence of an inert gas. In this case, the remaining chlorine in the blended product can be removed more completely, so that the purity of the blended product is further increased. Examples of the inert gas include nitrogen gas and argon. From the viewpoint of the cost, nitrogen gas is preferred among these inert gases.

It is preferred that the heating temperature of the heating step in the presence of an inert gas is higher than the heating temperature of the heating step in the presence of chlorine. However, it is preferred that the heating temperature of the heating step in the presence of an inert gas is higher than the heating temperature of the heating step in the presence of a halogen, provided that the difference in temperature is preferably at most 200°C, more preferably at most 100°C, further preferably at most 50°C.

The chlorine treatment may further include, after the heating step in the presence of an inert gas, a second heating step at reduced pressure which heats the blended product at reduced pressure. In this case, the remaining chlorine in the blended product can be removed more completely, so that the purity of the blended product is further increased. From the viewpoint of removing chlorine from the blended product and the viewpoint of the cost for heating, the heating temperature of the second heating step at reduced pressure is preferably from 600 to 1250°C, more preferably from 700 to 1200°C, further preferably from 800 to 1150°C. From the viewpoint of removing chlorine from the blended product and the viewpoint of the cost for reducing pressure, the pressure of the circumference of the blended product in the second heating step at reduced pressure is, in terms of absolute pressure, preferably from 0.0001 to 100 kPa, more preferably from 0.005 to 50 kPa, further preferably from 0.001 to 1 kPa. From the viewpoint of removing chlorine from the blended product and the viewpoint of the productivity, the time of maintaining the predetermined, reduced pressure in the second heating step at reduced pressure is preferably from 5 to 180 minutes, more preferably from 10 minutes to 120 minutes, further preferably from 15 minutes to 60 minutes. Incidentally, in the case where the cycle described later is repeated, the time of maintaining the predetermined, reduced pressure is the time of maintaining the predetermined, reduced pressure in the second heating step at reduced pressure of each cycle.

It is preferred that a cycle composed of the heating step in the presence of an inert gas and the second heating step at reduced pressure is repeated two times or more. In this case, the remaining chlorine in he blended product can be removed more completely, so that the purity of the blended product is further increased. From the viewpoint of highly purifying the blended product and the viewpoint of the productivity, the cycle composed of the heating step in the presence of an inert gas and the second heating step at reduced pressure is repeated, preferably from 2 to 20 times, more preferably from 3 to 15 times, further preferably from 5 to 12 times.

(Step (F))

In the step (F), the blended product is to be commercialized. For example, the blended product is subjected to a surface treatment with a silane coupling agent, or a classification treatment to remove the coarse particles precisely, as necessary. The blended product goes through the step (F), and then is delivered as a commercial product.

(Silicon dioxide powder produced according to a method of producing a silicon dioxide powder, which is one embodiment according to the present invention)

By performing the treatment under the preferred conditions described above, silicon dioxide powder with the amount of the impurities being restrained remarkably can be obtained.

By producing a silicon dioxide powder according to a method of producing a silicon dioxide powder, which is one embodiment according to the present invention, the content rate of the impurities in the silicon dioxide powder can be lowered. For example, according to a method of producing a silicon dioxide powder, which is one embodiment according to the present invention, a silicon dioxide powder having a uranium content rate of 2.0 ppb by mass or less, an iron content rate of 100 ppm by mass or less in terms of $Fe_2O_3$, and a titanium content rate of 10 ppm by mass or less in terms of $TiO_2$ oxide can be produced. In the case where the silicon dioxide powder is used for a semiconductor sealing material, when the rate of the uranium content in the silicon dioxide powder is high, there may be some cases where $\alpha$-ray emitted from the silicon dioxide powder causes the generation of memory errors in the semiconductor element. Furthermore, when the rates of the iron content and titanium content in the silicon dioxide powder are high, there may be some cases where short circuit failure is generated between wires present in a semiconductor, especially the semiconductor for an automobile.

By adjusting the heating temperature in the step of heating in the presence of chlorine to the temperature at which the impurities to be aimed reacts with chlorine to form the chlorides, the content rate of the impurities other than uranium, iron and titanium can be decreased. For example, the content rates of sodium, aluminum, potassium, calcium, and magnesium in the silicon dioxide powder can be decreased. Further, the magnetizable foreign substances in the silicon dioxide powder also can be decreased. In the case using the silicon dioxide powder as a filler for a resin composition, if the content rate of sodium in the silicon dioxide powder is high, there may be some cases where sodium serves as a catalytic poison against a curing catalyst to thereby delay the curing of the resin composition; if the content rate of aluminum in the silicon dioxide powder is high, there may be some cases where the fluidity of the resin composition is lowered; and if the content rates of potassium, calcium and magnesium in the silicon dioxide powder are high, there may be some cases where the moldability of the resin composition is lowered.

In the case of using the silicon dioxide powder for a semiconductor sealing material, if the content rate of sodium in the silicon dioxide powder is high, there may be some cases where corrosion of wires is caused or performance of the semiconductor element is lowered; and if the number of the magnetizable foreign substances in the silicon dioxide powder is large, there may be some cases where short circuit failure between the leads of the semiconductor, especially the semiconductor for an automobile, is generated.

If the content rates of iron, potassium, calcium and magnesium in the silicon dioxide powder are high, there may be some cases where the whiteness of the silicon dioxide powder is lowered.

The number of the magnetizable foreign substances having a particle size of 20 to 45 $\mu$m in 50 g of the silicon dioxide powder is preferably 200/50 g or less, 150/50 g or less, 100/50 g or less, 50/50 g or less, 25/50 g or less, 10/50 g or less. In the case where the number of the magnetizable foreign substances having a particle size of 20 to 45 $\mu$m in 50 g of the silicon dioxide powder is 600/50 g or less, when the silicon dioxide powder is used for a semiconductor sealing material, it is possible to restrain the generation of short circuit failure between the leads of the semiconductor, especially the semiconductor for an automobile, and it is possible to restrain the whiteness of the silicon dioxide powder from decreasing. The number of the magnetizable foreign substances having a particle size of 20 to 45 $\mu$m in 50 g of the silicon dioxide powder can be measured according to the method described in Examples described later. The number of the magnetizable foreign substances having a particle size of 45 to 100 $\mu$m in 50 g of the silicon dioxide powder is preferably 50/50 g or less, 40/50 g or less, 30/50 g or less, 20/50 g or less, 10/50 g or less, 5/50 g or less, or 2/50 g or less. The number of the magnetizable foreign substances having a particle size of 100 to 200 $\mu$m in 50 g of the silicon dioxide powder is preferably 10/50 g or less, 5/50 g or less, 2/50 g or less, 1/50 g or less, or 0/50 g. The number of the magnetizable foreign substances having a particle size of 200 to 275 $\mu$m in 50 g of the silicon dioxide powder is preferably 1/50 g or less or 0/50 g.

In the silicon dioxide powder, the content rate of aluminum is, in terms of $Al_2O_3$, preferably 550 ppm by mass or less or 500 ppm by mass or less. If the content rate of aluminum is, in terms of $Al_2O_3$, preferably 550 ppm by mass or less, in the case where the silicon dioxide powder is used for a semiconductor sealing material, it is possible to restrain the fluidity of the semiconductor sealing material from decreasing. From such a viewpoint, the content rate of aluminum is, in terms of $Al_2O_3$, preferably 400 ppm by mass or less, more preferably 350 ppm by mass or less. Incidentally, the lower limit of the content rate of aluminum is 0 ppm by mass. The content rate of aluminum can be measured according to the measurement method described in Examples described later.

In the silicon dioxide powder, the content rate of potassium is, in terms of $K_2O$, preferably 30 ppm by mass or less, 20 ppm by mass or less, or 10 ppm by mass or less. If the content rate of potassium is, in terms of $K_2O$, preferably 30 ppm by mass or less, in the case where the silicon dioxide powder is used for a semiconductor sealing material, it is possible to restrain the moldability of the semiconductor sealing material from decreasing. Further, it is possible to restrain the whiteness of the silicon dioxide powder from decreasing. Incidentally, the lower limit of the content rate of potassium is 0 ppm by mass. The content rate of potassium can be measured according to the measurement method described in Examples described later.

In the silicon dioxide powder, the content rate of sodium is, in terms of $Na_2O$, preferably 15 ppm by mass or less. If the content rate of sodium is, in terms of $Na_2O$, 15 ppm by mass or less, in the case where the silicon dioxide powder is used for a semiconductor sealing material, it is possible to restrain the curing of the semiconductor sealing material from delaying. Further, it is possible to restrain corrosion of wires from being generated and performance of the semiconductor element from lowering. Incidentally, the lower limit of the content rate of sodium is 0 ppm by mass. The content rate of sodium can be measured according to the measurement method described in Examples described later.

In the silicon dioxide powder, the content rate of calcium is, in terms of CaO, preferably 20 ppm by mass or less or 15 ppm by mass or less. If the content rate of calcium is, in terms of CaO, 15 ppm by mass or less, in the case where the silicon dioxide powder is used for a semiconductor sealing material, it is possible to restrain the moldability of the semiconductor sealing material from decreasing. Further, it is possible to restrain the whiteness of the silicon dioxide powder from decreasing. Incidentally, the lower limit of the content rate of calcium is 0 ppm by mass. The content rate of calcium can be measured according to the measurement method described in Examples described later.

In the silicon dioxide powder, the content rate of magnesium is, in terms of MgO, preferably 10 ppm by mass or less or 5 ppm by mass or less. If the content rate of magnesium is, in terms of MgO, 10 ppm by mass or less, in the case where the silicon dioxide powder is used for a semiconductor sealing material, it is possible to restrain the moldability of the semiconductor sealing material from decreasing. Further, it is possible to restrain the whiteness of the silicon dioxide powder from decreasing. Incidentally, the lower limit of the content rate of magnesium is 0 ppm by mass. The content rate of magnesium can be measured according to the measurement method described in Examples described later.

(Modification Example of a method of producing a silicon dioxide powder, which is one embodiment according to the present invention)

(Modification Example 1)

The method of producing a silicon dioxide powder, which is one embodiment according to the present invention, is not limited particularly as long as the method includes a heating step in the presence of chlorine, which heats silicon dioxide in the presence of chlorine. That is, the method of producing a silicon dioxide powder, which is one embodiment according to the present invention, is not limited particularly as long as it includes a step of subjecting silicon dioxide to a chlorine treatment, and further, the chlorine treatment is not limited particularly as long as it includes a step of heating in the presence of chlorine, which heats silicon dioxide in the presence of chlorine.

For examples, a silicon dioxide powder having a high purity may be produced by subjecting a classified silicon dioxide powder having a particle size falling within a certain range before blending to a chlorine treatment and then blending two or more of the classified silicon dioxide powders subjected to a chlorine treatment. Furthermore, a silicon dioxide powder having a high purity may be produced by subjecting a commercially available silicon dioxide powder to a chlorine treatment.

If the step of heating in the presence of chlorine enables the impurities and chlorine in the silicon dioxide powder to be decreased sufficiently by itself, only the step of heating in the presence of chlorine may be performed as the chlorine treatment.

(Modification Example 2)

In the method of producing a silicon dioxide powder, which is one embodiment according to the present invention, the impurities in the silicon dioxide powder are removed by using chlorine. Halides are likely to sublimate as compared with oxides, and therefore, the element to be used for removing the impurities in the silicon dioxide powder is not limited to chlorine, as long as it is a halogen element, and for example, the impurities in the silicon dioxide powder may be removed from the silicon dioxide powder by using fluorine, bromine, or the like, besides chlorine.

(Modification Example 3)

In the method of producing a silicon dioxide powder, which is one embodiment according to the present invention, the impurities in the silicon dioxide powder are removed. As long as the impurities can be removed by heating in the presence of a halogen, a metal oxide which includes the impurities to be removed is not limited to silicon dioxide. For example, impurities in aluminum oxide can be removed by heating aluminum oxide in the presence of a halogen. By heating an aluminum oxide in the presence of a halogen, the impurities in the oxidized alumina, namely, sodium, silicon, iron, titanium, and the like become halides thereof, which sublimate and are separated from the aluminum oxide. Thus, an aluminum oxide having a high purity cab be produced.

The method of producing a silicon dioxide powder, which is one embodiment according to the present invention, and the modification examples each is one embodiment of the method of producing a metal oxide according to the present invention, and the method of producing a metal oxide according to the present invention is not limited thereto.

EXAMPLES

In the following, the present invention is described in detail, referring to examples and comparative examples. Incidentally, the present invention is not limited to the following examples.

The silicon dioxide powder prepared by each of Examples and Comparative Examples was evaluated as follows.

(Particle Size)

Using a laser scattering diffraction particle size distribution measuring apparatus (trade name "CILAS920", manufactured by CILAS) or a particle size distribution measuring apparatus (trade name "LS-230", manufactured by Beckman Coulter), the frequency of the silicon dioxide powder was accumulated, and a particle size (d10) at which the accumulated frequency reached 10%, a particle size (d50) at when the accumulated frequency reached 50%, a particle size (d90) at when the accumulated frequency reached 90%, were determined.

(Specific Surface Area)

The specific surface area of the silicon dioxide powder was measured according to a BET method by using a specific surface area-measuring apparatus (trade name "Macsorb HM model-1208", manufactured by Macsorb).

(Spheroidicity)

The measurement was performed by using a wet type particle size • form analyzing apparatus (trade name "FPIA-3000", manufactured by Malvern Panalytical). A sample was dispersed in a pure water, the resultant liquid was introduced into a plane extension flow cell, 100 or more of an amorphous silica powder moving in the cell each was recorded as an image through an objective lens, and from the recorded images and the following formula (1), an average circularity was calculated. In the formula (1), HD represents a diameter of a circle having the same area as the area of the projected particle, which is obtained from the ratio between the projected area of the particle to be measured and the area of a perfect circle. PM represents the length of circumference of the particle to be measured. The calculated values of 200 particles of the amorphous silica powder were averaged to obtain an average circularity.

$$\text{Formula (1):} \quad \text{Average Circularity} = \pi \cdot HD/PM$$

From the average circularity, an average spheroidicity is obtained according to Formula: Average Spheroidicity = $(\text{Average Circularity})^2$.

(Content Rate of U (uranium))

The measurement of the content rate of uranium was performed by using a spectral fluorescence photometer (manufactured by Hitachi Keisokuki Co., Ltd. (Hitachi High-Tech Corporation), measuring limit: 0.01 ppb).

(Number of magnetizable foreign substance in 50 g of silicon dioxide powder)

A slurry was prepared by adding 50 g of the silicon dioxide powder and 800 g of an ion-exchanged water into a 1000-mL beaker. While the slurry was stirred with a stirring device which stirs the slurry at a rotation number of 550 rpm, provided that the rotation direction become reverse every 5 seconds, a bar magnet having a length of 150 mm, a diameter of 25 mm and a magnetic force of 12000 gauss, which was covered with a rubber-made cover having a thickness of 20 $\mu$m, was immersed therein for one minute to capture the magnetizable particles. The bar magnet which captured the magnetizable particles was taken out from the slurry, the rubber-made cover was taken off above an empty beaker, and washed with an ion-exchanged water to release the magnetizable particles, thereby dispersing the magnetizable particles in water. The obtained dispersion liquid is treated with a suction filtration equipment provided with a nylon filter (aperture: 13 $\mu$m) having a diameter of 25 mm, so that the magnetizable particles were collected on the nylon filter. The nylon filter collecting the magnetizable particles thereon was placed under a microscope, and with respect to the magnetizable particles collected on the nylon filter, the number of the magnetizable particles of 20 $\mu$m or more was measured while moving over the whole area of the filter with a magnification of 100.

(Content Rate of Aluminum, Iron, Potassium, Sodium, Calcium, Magnesium and Titanium)

A sample solution was prepared by subjecting the silicon dioxide powder to heat decomposition by using hydrofluoric acid, nitric acid. The sample solution was subjected to quantitative analysis by means of an inductively coupled plasma mass spectrometric analysis apparatus to measure the content rate of aluminum in terms of $Al_2O_3$, the content rate of iron in terms of $F_2O_3$, the content rate of potassium in terms of $K_2O$, the content rate of sodium in terms of $Na_2O$, the content rate of calcium in terms of CaO, the content rate of magnesium in terms of MgO, and the content rate of titanium in terms of $TiO_2$ in the silicon dioxide powder.
The following silicon dioxide powders were prepared.

(Silicon Dioxide Powder A)

The silicon dioxide powder indicated in Table 1 was subject to a chlorine treatment to prepare the silicon dioxide powder A.
For the chlorine treatment, a chlorine atmosphere batch furnace (trade name: "Model 1480", manufactured by Noritake Co., Limited.) was used. The outline of the conditions on the temperature and pressure of the chlorine treatment is shown in Fig. 1. Further, the conditions of operating the chlorine treatment are described below.

(Conditions of operating the chlorine treatment)

(Gases Used)

Purity of chlorine gas supplied into the chlorine atmosphere batch furnace: 100%
Purity of nitrogen gas supplied into the chlorine atmosphere batch furnace: 99.998%

(Step of Heating in the Presence of Chlorine)

Flow rate of chlorine gas supplied into the chlorine atmosphere batch furnace: 5 L/min
Flow rate of nitrogen gas supplied into the chlorine atmosphere batch furnace: 20 L/min
Content rate of chlorine gas based on the total gases supplied into the chlorine atmosphere batch furnace: 20% by volume
Heating temperature: 900°C
Heating time of the step of heating in the presence of chlorine in one cycle: 5 minutes
Pressure: 91.3 kPa

Note: First, the pressure of the inside of the batch furnace was reduced to 0.01 kPa, and then, chlorine gas and nitrogen gas were supplied. The temperature-raising rate at raising the temperature from room temperature to 900°C was 5°C/min.

(First heating step at reduced pressure)

Heating temperature: 900°C
Pressure: 0.13 kPa
Time of maintaining the above pressure at the first heating step at reduced pressure in one cycle: 2 minutes

(Cycle composed of the heating step in the presence of chlorine and the first heating step at reduced pressure)

Number of cycles: 6 times

(Heating step in the presence of an inert gas)

Flow rate of nitrogen gas supplied into the chlorine atmosphere batch furnace: 20 L/min

Heating temperature: 1000°C
Heating time of the heating step of the presence of an inert gas in one cycle: 5 minutes
Pressure: 91 kPa

Note: In transferring from the first pressure-reducing step to the heating step in the presence of an inert gas, the pressure of the inside of the batch furnace was reduced to 0.01 kPa to thereby remove chlorine gas in the batch furnace, and then, nitrogen gas was supplied.

(Second heating step at reduced pressure)

Heating temperature: 1000°C
Pressure: 0.13 kPa
Time of maintaining the above pressure at the second heating step at reduced pressure in one cycle: 2 minutes

(Cycle composed of the heating step in the presence of an inert gas and the second heating step at reduced pressure)

Number of cycles: 4 times
Note: After 4 cycles, the pressure of the inside of the batch furnace was reduced to 0.01 kPa, and then, the pressure of the inside of the batch furnace was made atmospheric pressure.

(Silicon Dioxide Powder B)

A silicon dioxide powder B was prepared in the same manner as in the preparation of the silicon dioxide powder A except for changing the silicon dioxide powder used to the silicon dioxide powder indicated in Table 1.

(Silicon Dioxide Powder C)

A silicon dioxide powder C was prepared in the same manner as in the preparation of the silicon dioxide powder A except for changing the silicon dioxide powder used to the silicon dioxide powder indicated in Table 1.

(Silicon Dioxide Powder D)

A silicon dioxide powder D was prepared in the same manner as in the preparation of the silicon dioxide powder A except for changing the silicon dioxide powder used to the silicon dioxide powder indicated in Table 1.

(Silicon Dioxide Powder E)

A silicon dioxide powder E was prepared in the same manner as in the preparation of the silicon dioxide powder A except for changing the silicon dioxide powder used to the silicon dioxide powder indicated in Table 1.

(Silicon Dioxide Powder F)

A silicon dioxide powder F was prepared in the same manner as in the preparation of the silicon dioxide powder A except for changing the silicon dioxide powder used to the silicon dioxide powder indicated in Table 1.

(Silicon Dioxide Powder G)

A silicon dioxide powder G was prepared in the same manner as in the preparation of the silicon dioxide powder A except for changing the silicon dioxide powder used to the silicon dioxide powder indicated in Table 1.

The results are shown in Table 1.

[Table 1]

Table 1

| | Apparatus | Silicon Dioxide Powder A (Comparative Example) | | Silicon Dioxide Powder B (Comparative Example) | | Silicon Dioxide Powder C (Comparative Example) | | Silicon Dioxide Powder D (Comparative Example) | | Silicon Dioxide Powder E (Comparative Example) | | Silicon Dioxide Powder F (Comparative Example) | | Silicon Dioxide Powder G (Comparative Example) | |
| | | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment |
| | | CILAS920 | CILAS920 | COULTER | COULTER | COULTER | COULTER | CILAS920 | CILAS920 | CILAS920 | CILAS920 | CILAS920 | CILAS920 | CILAS920 | CILAS920 |
| Particle Size ($\mu m$) d10 | | 0.9 | 1.0 | 0.2 | 0.2 | 0.2 | 0.2 | 1.8 | 1.8 | 2.7 | 2.7 | 9.6 | 9.7 | 12.6 | 12.4 |
| Particle Size ($\mu m$) d50 | | 12.9 | 12.7 | 0.6 | 0.6 | 0.6 | 0.6 | 3.4 | 3.5 | 10.1 | 10.6 | 22.0 | 20.8 | 25.6 | 23.5 |
| Particle Size ($\mu m$) d90 | | 23.7 | 23.6 | 2.1 | 2.1 | 1.8 | 1.8 | 5.9 | 5.9 | 21.1 | 21.4 | 56.3 | 55.0 | 51.1 | 50.2 |
| Specific Surface Area ($m^2/g$) | | 4.3 | 4.1 | 6.0 | 5.9 | 5.8 | 5.7 | 3.2 | 3.2 | 2.0 | 2.1 | 1.5 | 1.6 | 1.4 | 1.4 |
| Spheroidicity | | 0.86 | 0.85 | 0.84 | 0.84 | 0.84 | 0.84 | 0.91 | 0.89 | 0.88 | 0.87 | 0.87 | 0.88 | 0.87 | 0.88 |
| Content Rate of U (ppb by mass) | | 10.3 | 2.0 | 7.8 | 0.6 | 38 | 0.6 | 20 | 0.8 | 1.9 | 0.9 | 50 | 10.3 | 34 | 12.1 |
| Magnetizable foreign Substance (particle/50g) 20 to 45 $\mu m$ | | 174 | 18 | 16 | 8 | 86 | 49 | 34 | 38 | 581 | 184 | 870 | 423 | 1488 | 1273 |
| Magnetizable foreign Substance (particle/50g) 45 to 100 $\mu m$ | | 35 | 9 | 3 | 1 | 41 | 39 | 18 | 17 | 40 | 24 | 122 | 59 | 414 | 328 |
| Magnetizable foreign Substance (particle/50g) 100 to 200 $\mu m$ | | 3 | 1 | 0 | 0 | 2 | 3 | 1 | 2 | 2 | 2 | 4 | 3 | 10 | 7 |
| Magnetizable foreign Substance (particle/50g) 200 to 275 $\mu m$ | | 0 | 0 | 0 | 0 | 0 | 0 | 0 | 0 | 0 | 0 | 0 | 0 | 0 | 1 |

| | | Silicon Dioxide Powder A | | Silicon Dioxide Powder B | | Silicon Dioxide Powder C | | Silicon Dioxide Powder D | | Silicon Dioxide Powder E | | Silicon Dioxide Powder F | | Silicon Dioxide Powder G | |
|---|---|---|---|---|---|---|---|---|---|---|---|---|---|---|---|
| | | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment | Before Chlorine Treatment | After Chlorine Treatment |
| | | Comparative Example | Example | Comparative Example | Example | Comparative Example | Example | Comparative Example | Example | Comparative Example | Example | Comparative Example | Example | Comparative Example | Example |
| Chemical Impurities (ppm by mass) | $Al_2O_3$ | 1590 | 840 | 290 | 160 | 370 | 310 | 360 | 390 | 1260 | 520 | 1410 | 840 | 1390 | 1360 |
| | $Fe_2O_3$ | 28 | 20 | 103 | 36 | 105 | 59 | 165 | 90 | 44 | 41 | 20 | 20 | 23 | 16 |
| | $K_2O$ | 58 | 48 | 3 | 3 | 2 | 2 | 11 | 10 | 41 | 30 | 39 | 37 | 37 | 27 |
| | $Na_2O$ | 36 | 33 | 2 | 1 | 2 | 2 | 52 | 12 | 40 | 16 | 30 | 22 | 30 | 23 |
| | $CaO$ | 17 | 16 | 15 | 10 | 15 | 12 | 17 | 19 | 18 | 19 | 16 | 13 | 21 | 17 |
| | $MgO$ | 10 | 6 | 5 | 3 | 7 | 2 | 12 | 6 | 16 | 5 | 6 | 6 | 18 | 21 |
| | $TiO_2$ | 19 | 10 | 9 | 1 | 12 | 3 | 6 | 4 | 16 | 8 | 21 | 18 | 23 | 21 |

Comparing Examples and Comparative Examples, it can be seen that the impurities in the silicon dioxide powder can be removed by heating the silicon dioxide powder in the presence of chlorine. Further, it can be seen that in the case where silicon dioxide is heated in the presence of chlorine, the particle size, the specific surface area, and the spheroidicity of the silicon dioxide powder do not change much.

**Claims**

1. A method of producing a metal oxide powder, comprising a heating step in the presence of a halogen, which heats a metal oxide in the presence of a halogen.

2. The method of producing a metal oxide powder according to claim 1, wherein the halogen is chlorine.

3. The method of producing a metal oxide powder according to claim 1 or 2, further comprising, after the heating step in the presence of a halogen, a first heating step at reduced pressure, which heats the metal oxide at reduced pressure.

4. The method of producing a metal oxide powder according to claim 3, wherein a cycle composed of the heating step in the presence of a halogen and the first heating step at reduced pressure is repeated two times or more.

5. The method of producing a metal oxide powder according to any one of claims 1 to 4, further comprising a heating step in the presence of an inert gas, which heats the metal oxide in the presence of an inert gas.

6. The method of producing a metal oxide powder according to claim 5, wherein the heating temperature of the heating step in the presence of an inert gas is higher than the heating temperature of the heating step in the presence of a halogen.

7. The method of producing a metal oxide powder according to claim 5 or 6, further comprising, after the heating step in the presence of an inert gas, a second heating step at reduced pressure which heats the metal oxide at reduced pressure.

8. The method of producing a metal oxide powder according to claim 7, wherein a cycle composed of the heating step in the presence of an inert gas and the second heating step at reduced pressure is repeated two times or more.

9. The method of producing a metal oxide powder according to any one of claims 1 to 8, wherein the heating temperature of the heating step in the presence of a halogen is such a temperature that impurities to be aimed react with a halogen to become halides.

10. The method of producing a metal oxide powder according to any one of claims 1 to 9, wherein the metal oxide is at least one selected from the group consisting of silicon dioxide and aluminum oxide.

11. A metal oxide powder, wherein the metal is a metal other than uranium, iron and titanium, and, in the metal oxide powder, the content rate of uranium is 1.0 ppb by mass or less, the content rate of iron is 100 ppm by mass or less in terms of $Fe_2O_3$, and the content rate of titanium in terms of $TiO_2$ is 8 ppm by mass or less.

Fig. 1

## INTERNATIONAL SEARCH REPORT

| International application No. |
| --- |
| **PCT/JP2022/013187** |

### A. CLASSIFICATION OF SUBJECT MATTER

***C01B 13/16***(2006.01)i; ***C01B 33/18***(2006.01)i
FI:  C01B13/16; C01B33/18 D

According to International Patent Classification (IPC) or to both national classification and IPC

### B. FIELDS SEARCHED

Minimum documentation searched (classification system followed by classification symbols)

C01B13/16; C01B33/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 6-040713 A (MITSUBISHI MATERIAL KUOOTSU KK, MITSUBISHI MATERIALS CORP) 15 February 1994 (1994-02-15)<br>claims | 1-2, 9-10 |
| A | | 3-8 |
| X | JP 7-172977 A (TOSHIBA CERAMICS CO LTD) 11 July 1995 (1995-07-11)<br>paragraph [0013] | 1-2, 9-10 |
| A | | 3-8 |
| X | JP 8-290911 A (HERAEUS QUARZGLAS GMBH) 05 November 1996 (1996-11-05)<br>claims | 1-2, 9-10 |
| A | | 3-8 |
| X | JP 2006-21948 A (ASAHI DENKA KOGYO KK) 26 January 2006 (2006-01-26)<br>claims | 1-2, 9-10 |
| A | | 3-8 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 May 2022** | **07 June 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/013187**

**C.    DOCUMENTS CONSIDERED TO BE RELEVANT**

| Category* | Citation of document, with indication, where appropriate, of the relevant passages | Relevant to claim No. |
|---|---|---|
| X | JP 2007-145698 A (JAPAN SUPER QUARTS CORP) 14 June 2007 (2007-06-14) claims, paragraph [0028] | 1-2, 9-10 |
| A | | 3-8 |
| X | WO 2018/096876 A1 (TOKUYAMA CORP) 31 May 2018 (2018-05-31) claims, paragraphs [0011], [0131]-[0184] | 11 |
| X | JP 7-69617 A (NITTO CHEMICAL INDUSTRY CO LTD) 14 March 1995 (1995-03-14) claims, paragraphs [0045]-[0059] | 11 |

Form PCT/ISA/210 (second sheet) (January 2015)

**INTERNATIONAL SEARCH REPORT**

| International application No. |
|---|
| **PCT/JP2022/013187** |

| Box No. III | Observations where unity of invention is lacking (Continuation of item 3 of first sheet) |
|---|---|

This International Searching Authority found multiple inventions in this international application, as follows:

The inventions in claims 1-11 of the claims are classified into the following two inventions.

Invention 1; Claims 1-10
   Each of documents 1-5 cited in the ISR is considered to disclose a dehydration method, refinement method, or purification method for silica particles, the method comprising firing silica particles in the presence of chlorine gas.
   Therefore, the invention in claims 1 and 2 of the claims lacks novelty and does not have a special technical feature.
   Moreover, a special technical feature was found in claim 3 referring to claim 1 or 2, and thus claims 4-10 referring to claim 3 also have a special technical feature.
   Accordingly, claims 1-10 are classified as invention 1.

Invention 2; Claim 11
   Claim 11 does not share a same or corresponding special technical feature with claim 3 classified as invention 1. Moreover, the invention in claim 11 of the claims has the special technical feature in which the contents of uranium, iron, and titanium are specific values, and is thus classified as invention 2.

1. ☑  As all required additional search fees were timely paid by the applicant, this international search report covers all searchable claims.

2. ☐  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**      ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☑  No protest accompanied the payment of additional search fees.

Form PCT/ISA/210 (continuation of first sheet) (January 2015)

## INTERNATIONAL SEARCH REPORT
### Information on patent family members

International application No.

**PCT/JP2022/013187**

| Patent document cited in search report | | | Publication date (day/month/year) | Patent family member(s) | | | Publication date (day/month/year) |
|---|---|---|---|---|---|---|---|
| JP | 6-040713 | A | 15 February 1994 | (Family: none) | | | |
| JP | 7-172977 | A | 11 July 1995 | (Family: none) | | | |
| JP | 8-290911 | A | 05 November 1996 | (Family: none) | | | |
| JP | 2006-21948 | A | 26 January 2006 | (Family: none) | | | |
| JP | 2007-145698 | A | 14 June 2007 | (Family: none) | | | |
| WO | 2018/096876 | A1 | 31 May 2018 | TW | 201825399 | A | |
| JP | 7-69617 | A | 14 March 1995 | GB claims, specification, pp. 18-24 KR TW | 2279944 10-1995-0000563 271432 | A A B | |

**REFERENCES CITED IN THE DESCRIPTION**

**Patent documents cited in the description**

- JP 2010159168 A